# EUROPEAN PATENT APPLICATION

(11) **EP 2 949 587 A1**
(43) Date of publication of application: **02.12.2015**
(21) Application number: 15176647.4
(22) Date of filing: 03.02.2011
(51) Int. Cl.: B65D 5/42, B65D 77/04, G06Q 10/00

(54) **PACKAGE PROVIDED WITH A TRACEABILITY AND ORIGINALITY VERIFICATION CODE, ITS PRODUCTION METHOD AND METHOD FOR TRACING IT**

(30) Priority: 08.02.2010 IT MI20100190; 08.02.2010 IT MI20100191; 11.10.2010 IT MI20101853
(62) Divisional of application: 11701691.5
(71) Applicant: GI.BI.EFFE S.r.l., 20135 Milano (IT)
(72) Inventor: LO DUCA, Carmelo, 20141 MILANO (MI) (IT)
(74) Representative: Kratter, Carlo

(57) **Abstract**

A package (1) comprising an enclosure (2) and at least one product contained therein, the enclosure and the at least one product carrying printed thereon the same identification sign (4C, 4B). The identification sign is different and unique for each enclosure of the same type.

## Description

The present invention relates to a package comprising an enclosure and at least one product enclosed therein, the enclosure and the at least one product carrying the same identification sign or traceability code directly printed thereon.

The term "enclosure" means a packaging box or bag made of any type of material such as card, cardboard, plastic, wood, etc.

The safety system deriving from the presence of the identification sign is applicable to any type of commodity or product such as perfumes, creams and the like, chemical products, electronic products, etc. However the system and the enclosure are particularly suitable for use with medicaments.

Commercial products or commodities have to be packaged in order to be transported or sold. An example is a medicament packaged in a blister strip housed in a usually cardboard box.

The cardboard box carries printed thereon a considerable quantity of important information relative to the product, starting with its commercial name, it production firm, the expiry date, the batch number, etcetera.

To prevent the box contents being tampered with or replaced by poorer products, various security techniques are used. Those which have proved most effective are systems which highlight any prior opening of the box, for example by the breakage of certain box parts, which act as seals. Such boxes are widely used but, even though very effective, they have the drawback of being particularly difficult to close automatically on a production line after the product has been inserted therein.

Moreover once opened, the product placed in their interior can be replaced by the proprietor, possibly by oversight, by another with similar aesthetic characteristics, or by the same product but taken from another box, and hence for example with a different expiry date. These situations, although hardly probable in a domestic environment, easily occur for example in hospital environments where many boxes of the same medicaments are used and opened simultaneously.

The documents EP 09 24 676 and US2007/0299693 describe a method for correctly administering drugs to patients by means of a formulary which presents a plurality of labels on which personalized information is printed. This information is for example relative to the patient who has to assume a certain drug (his/her name) and/or the drug characteristics (the drug name). The labels are prepared in the pharmacy when a client purchases drugs. The personalized information printed on the labels is also printed on a container in which the pharmacist inserts all the drugs duly labelled. In this respect before each of the drugs is inserted into the bag, a label taken from the formulary is attached to it carrying printed thereon the same information as carried on the container.

This method does not ensure authenticity of the drugs and has as its object that of enabling the final user to identify them only more easily. In this respect, a user who visits the pharmacist twice to acquire the same medicaments would be in possession of two containers carrying the same information. The user could hence easily exchange the contents of one container with those of another, hence generating a confusion situation. US 3061081 describes a package containing a plurality of small articles, each identified by its own identification code printed on the packet. A portion of the package is in the form of a microfilm. The microfilm has a list printed on it which can be displayed by optical enlargement devices. On reading the identification code carried on the small bag, a user can associate the code with that printed on the container list, in which much detailed information is present regarding the article inside the small bag. Such information could not be printed on the small packet as there is insufficient space.

This method enables much information to be supplied on the contents of small packets, such information not being able to be printed on the small bag.

However it does not enable the contents to be certified, given that the list printed on the microfilm is always the same for all the containers and can contain more codes than those present on the small bags contained in the container. Moreover this system does not offer any guarantee that the small packets contained in the container are original, in that they could originate from other containers. In this respect the codes carried on the small packets are product codes, and are hence all equal for the same type.

An object of the present invention is therefore to provide a package improved over the known art, which enables easier identification of possible errors due to the packaging stage and/or which enables the final user to identify possible counterfeited packages in which the product inside the package has been fraudulently replaced, or replaced by error. This and other objects are attained by providing a package in accordance with the technical teachings of the accompanying claims.

Further characteristics and advantages of the invention will be apparent from the description of a preferred but non-exclusive embodiment of the package, illustrated by way of non-limiting example in the accompanying drawings, in which:
Figure 1 is a schematic plan view of an enclosure forming part of the package, before make-up;
Figure 2 is a view of the made-up enclosure open on one side, during packaging;
Figure 3 is a plan view of a package during packaging, showing the made-up enclosure closed at one end, and from which the just inserted product partially projects;
Figure 4 shows a functional scheme of a system for tracing and controlling marketed packages.

With reference to said figures, these show a package indicated overall by the reference numeral 1.

It comprises an external enclosure 2 which in the example shown in the figures consists of a cardboard box.

The term "enclosure" means any container (box, packaging bag, etc.) able to house a product. The enclosure can be made of any type of material such as card, cardboard, plastic, wood, polystyrene, metal, etc.

The enclosure presents, directly printed on it, a marking 3A containing an identification sign 4A, which is different and unique for each enclosure of the same type. Essentially, each enclosure presents a unique identification sign, a sort of "nameplate", which is generated preferably in a random manner and printed on the enclosure during the final operations involved in preparing the enclosure.

The identification sign 4A can be a number or an alphanumeric string, or a sign in such a format and with such dimensions as to be easily writable by a user using the naked eye.

The marking 3A can be in the form of a group of signs, and preferably presents both the identification sign 4A and, associated with it, a "data-matrix" code 5 which together with the other information stored in it also carries the identification sign.

In this manner the identification sign is stored within the data-matrix and can be easily read, including by a computer.

The identification sign 4A (and the marking 3A) are printed on the enclosure, in the sense that they are carried on it in an indelible manner, for example by ink jet printing or by another suitable known printing method.

Advantageously the identification sign, which is substantially a unique product code, can be provided by a traceability control body, such as the Ministry of Health (in the case of drugs), or can be a random number or string generated by a computer. The only limitation is that it must be unique for that product and never repeated, at least for a considerable time period, for example 6 years.

It must also be impersonal. In the present text the term "impersonal" means that it cannot and must not be linked to the personal details of a final user, or to information which can lead to a predetermined final user.

In addition to the marking 3A a further marking 3B can be present on the enclosure, preferably but not necessarily identical to the first, which can for example comprise the data-matrix 5, the name of the product 6, and the sign or string 4D.

What is important is that the further marking 3B contains at least one piece of information from which the identification sign 4A can be obtained directly or indirectly.

The further marking is provided on a preferably self-adhesive label 50 removable from the enclosure, and which is applied to a silicone-coated portion 51 of the enclosure such that it can be removed therefrom and adhesively applied where required.

In completing the enclosure description, it should be noted that on it there can be printed further additional information identical for all the containers or groups of containers. For example, in the example in question, which relates to an enclosure for medicaments, the following will be present: the bar code 7 (identical for all the enclosures of that medicinal product), the expiry date 8, and the batch number 9 (identical for all the packages of that batch). The expiry date and the batch number are printed on the enclosure only at the moment of inserting the product into the enclosure (or slightly before), while the identification sign (or marking) can be printed by the manufacturer producing the box, or directly by the pharmaceutical firm which inserts the product into the enclosure.

Advantageously, in addition to comprising the identification sign, the enclosure also comprises security means able to indicate that it has been already opened. These security means comprise for example a portion 21 breakable on opening the box and acting as a seal.

Advantageously the enclosure can also present writings and indications 20 formed in Braille.

Advantageously, during packaging, a further identification sign 4B is printed on the enclosure identical to that originally present on the enclosure and applied by the manufacturer on producing the enclosure. For this purpose the sign originally present on the enclosure is read automatically.

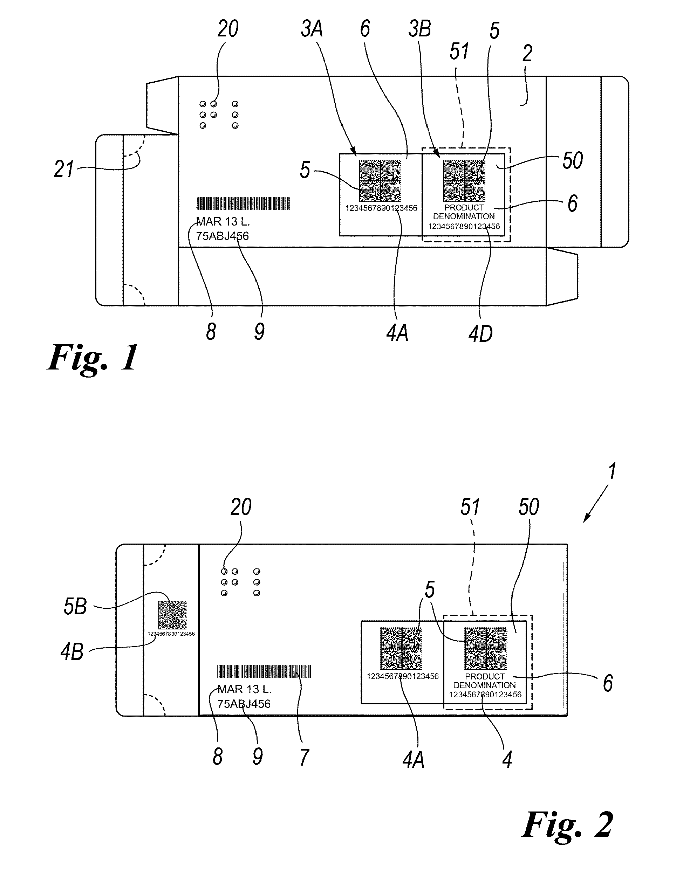

The further identification sign is preferably positioned in a region of the enclosure which, when this is closed, remains in its interior and hence invisible from the outside. Advantageously, it is positioned on the inside of a closure flap of the enclosure, as shown in Figure 2.

During the packaging stage but before the product is inserted into the enclosure, an identification sign 4C is printed thereon identifying that present in the enclosure.

In the illustrated example the product is a blister strip of tablets (but could be any type of product, as stated). Consequently the identification sign 4C is advantageously printed in any known manner on the aluminium foil which seals the tablets within their housings.

Hence the user, on opening the package, can compare the identification sign 4C printed on the product with that 4A present on the enclosure and determine with absolute certainty that that particular product is associated with that particular enclosure, and that hence the information printed on the enclosure corresponds exactly to that product (expiry, etc.). Correspondence of these two signs with the further identification sign 4B printed inside the box displays the originality of the product.

The aforedescribed package is formed by preparing an enclosure on which an identification sign 4A different for each enclosure of the same type is printed, then automatically reading the identification sign, and printing the identification sign on the product.

Having done this, the product is inserted into the enclosure on a packaging line, which is then closed. This all takes place automatically on a packaging line. The fact that the identification signs 4B and 4C are printed on the product and on the enclosure respectively, during the same packaging stage (and hence slightly before the product is inserted into the respective enclosure) ensures correspondence between the two signs, so preventing possible packaging errors.

In contrast, if the sign 4B was not also printed on the enclosure, reading errors could arise, or errors due to erroneous packaging of the product in the wrong enclosure.

According to the present invention, the original identification sign 4A (and 4D) could also not be present on the enclosure, which would hence be left without unique identification signs by the enclosure manufacturer.

The unique identification signs 4B and 4C would then be printed respectively on the enclosure and on the product during the actual original packaging stage carried out by the pharmaceutical firm, hence attaining the objects of the present invention.

It is of fundamental importance to print the unique identification signs on both the enclosure and the product during a packaging stage prior to selling the product, precisely to be able to certify its authenticity later.

The unique sign 4B (and 4C) will in this case be generated in a manner identical to that by which the unique identification sign printed by the enclosure manufacturer was generated in the preceding embodiment.

In the described examples, to increase the amount of information present, other elements containing information can be printed on the enclosure and on the product during packaging, such as the data-matrix codes 5B, 5C or other information (markings). These codes are mutually identical in the information which they carry.

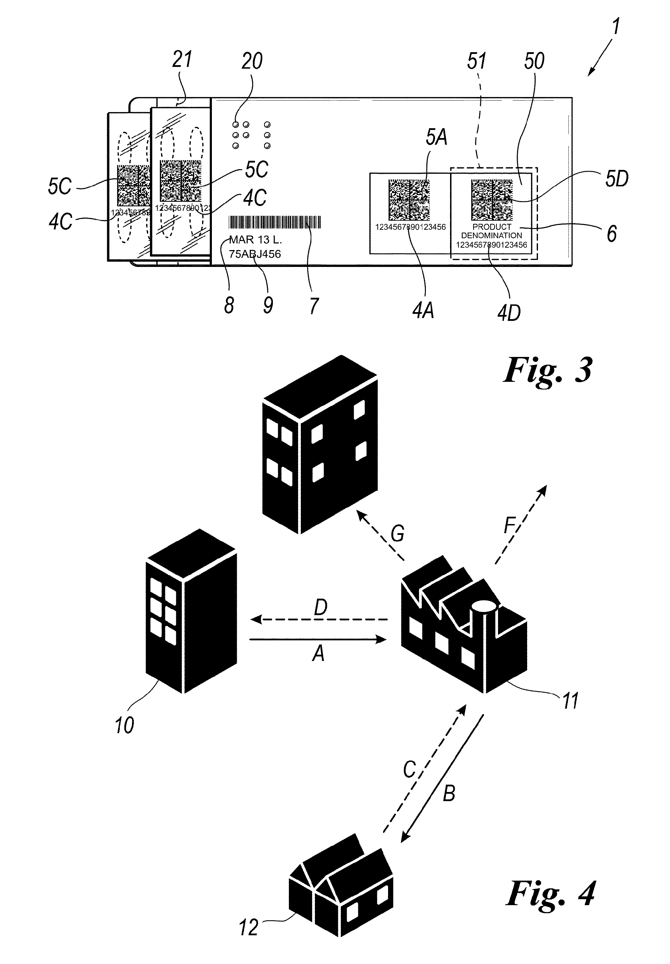

Figure 4 shows an example of how the package of the present invention can be used in a product tracing system.

In the example, reference will be made to pharmaceutical products for which the system is particularly effective, however the system can evidently be used for any type of commodity, including food.

In a possible embodiment of the system, the Ministry of Health (or the requisite Authority) 10 transmits (arrow A) to the pharmaceutical firm 11 which produces the final product the identification signs, which in the example are unique codes unrepeatable for at least 6 years, and impersonal.

The pharmaceutical firm transmits (arrow B) the codes to the enclosure manufacturer 12, which prepares the containers for printing the code.

The enclosure manufacturer 12 sends to the pharmaceutical firm the containers on which the identification codes communicated by the relevant Authority 10 are already printed. A list is also transmitted of the codes or identification signs (preferably in electronic form) printed on the containers, which the pharmaceutical firm verifies during packaging.

During this stage the pharmaceutical firm also prints the identification sign on the product inserted into the container and also again on the container or enclosure (as previously described).

This printing takes place on an automatic packaging line. Essentially the identification sign printed on a container to be filled is read by a video camera controlled by a computer. The computer controls a printer which reproduces the actual identification sign, read by the video camera, on the product (or products) which is to be packaged in the corresponding container.

When the products have been packaged, the pharmaceutical firm transmits (arrow D) to the relevant Authority 10 those identification signs (codes) used on the products marketed. Product tracing then commences. Advantageously the pharmaceutical firm also transmits the data (arrow G) to the State Fiscal Authority (for example Customs and Excise), which is hence able to monitor any tax evasion problems.

The product is then sold (arrow F). It should be noted that the batch number and expiry date are printed both on the container (enclosure) and on the product for each of the products marketed. This printing takes place during the packaging of the product in the enclosure.

The enclosures supplied by the enclosure manufacturer could present the identification sign only on the enclosure, but preferably both on the enclosure and on said removable label.

In this case the produce tracing system can be further improved by adding a supplementary check.

Thus when a pharmaceutical package is to be sold against a medical prescription, the pharmacy in which it is sold removes the label 50 and attaches it to the medical prescription (or any other document), which is then sent to the relevant Authority.

The identification sign present on the package can also be read in another manner and transmitted in known manner to the relevant Authority.

The relevant Authority can carry out a double check on the label received. A first verification is to check that the identification sign corresponds to one of those effectively sold by the pharmaceutical firm and present on the list. A second verification is to check its uniqueness. Once identified as double code (i.e. already present in the database, hence already received from a previous prescription), an alarm code is generated. At this point the controlling Authority can carry out the required checks to verify the originality and authenticity of the product.

The aforedescribed tracing method can evidently be adapted to any type of product. Obviously in that case there will be no medical prescription present on which to apply the label taken from the enclosure, but it can be replaced by any suitable document, such as a list of the products sold, or the like.

## Claims

1. A package (1) comprising an enclosure (2) and at least one product enclosed therein, the at least one product carrying an identification sign (4C) printed thereon, said identification sign (4C) being different and unique for each product of the same type, the identification sign (4C) on the product being printed on the product during a stage of automatically packaging the product in the enclosure (2), **characterised in that** a further identification sign (4B) is printed on the enclosure (2) during said stage of automatically packaging, **in that** this further identification sign (4B) is positioned in the interior of the enclosure (2) when this is closed, and **in that** said identification sign (4C) on the product and said further identification sign (4B) on the enclosure (2) are the same.

2. A package as claimed in claim 1, wherein the enclosure (2) comprises an identification sign (4A) which is the same as the identification sign (4C) printed on the product, said identification sign (4A) being printed on the enclosure (2) before the stage of automatically packaging the product in the enclosure (2).

3. A package as claimed in claim 1 or 2, wherein the identification sign (4B, 4C) is impersonal.

4. A package as claimed in one or more of the preceding claims, wherein the identification sign (4B, 4C) is random.

5. A package as claimed in claim 1, wherein a further identification sign (4A) is present, printed on the enclosure (2) during an enclosure production stage preceding the packaging stage.

6. A package as claimed in claim 5, wherein the enclosure (2) comprises a removable adhesive label (50) on which the identification sign (4A) carried on the enclosure (2) is printed.

7. A package as claimed in claim 1, wherein the identification sign (4B) printed on the enclosure (2) during the packaging stage is positioned on a closure flap of the enclosure (2).

8. A package as claimed in one or more of the preceding claims wherein the enclosure (2) comprises security means (21) able to indicate that the enclosure (2) has already been opened.

9. A package as claimed in claim 8, wherein said security means comprise a portion (21) breakable on opening the enclosure and acting like a seal.

10. A method for producing a package comprising an enclosure (2) and a product housed in its interior, wherein, during a stage of automatically packaging the product in the enclosure (2), an identification sign (4B, 4C) is printed on the product and on the enclosure (2), the identification signs (4B, 4C) being different and unique for each enclosure (2) and for each product of the same type, **characterized in that** the identification sign (4B) printed on the enclosure (2) during the packaging stage is positioned in the interior of the enclosure (2) when this is closed, and **in that** said identification sign (4C) on the product and said identification sign (4B) on the enclosure (2) are the same.

11. A method as claimed in claim 10, wherein, before the packaging stage, the enclosure (2) already presents an identification sign (4A) different and unique for each enclosure (2) of the same type then, during the automatic packaging stage:
a. the identification sign (4A) is read from the enclosure (2) and
b. it is printed on the product,
c. the product is inserted into the enclosure (2),
d. the enclosure (2) is closed.

12. A method as claimed in claim 11, wherein, before the packaging stage, the enclosure (2) presents a further identification sign (5) different and unique for each enclosure (2) of the same type then, during the automatic packaging stage:
a. the further identification sign (5) is read,
b. the read sign (5) is printed both on the product and on the enclosure (2),
c. the product is inserted into the enclosure (2),
d. the enclosure (2) is closed.

13. A method as claimed in the preceding claim, wherein the identification sign (5B) printed on the enclosure (2) during the packaging stage is positioned on a closure flap of the enclosure (2).

14. A method as claimed in claim 9, wherein the identification sign (4C) is impersonal.

15. A method as claimed in one or more of the preceding claims, wherein the identification sign (4C) is random.

16. A package or method as claimed in one or more of the preceding claims, wherein said identification sign (4C) comprises a numerical and/or alphanumeric code.

17. A package or method as claimed in the preceding claim, wherein said numerical and/or alphanumeric code are stored in a data-matrix (5).
